# EUROPÄISCHE PATENTSCHRIFT

(11) **EP 3 378 152 B1**
(45) Veröffentlichungstag und Bekanntmachung des Hinweises auf die Patenterteilung: **11.01.2023**
(21) Anmeldenummer: 16770255.4
(22) Anmeldetag: 20.09.2016
(51) Int. Cl.: H02M 7/5387, H02P 3/22, B25J 19/00, H02P 29/024

(54) **ELEKTRISCHER ANTRIEB FÜR EINEN INDUSTRIELLEN ROBOTER**
ELECTRIC DRIVE FOR AN INDUSTRIAL ROBOT
ENTRAÎNEMENT ÉLECTRIQUE POUR UN ROBOT INDUSTRIEL

(30) Priorität: 19.11.2015 DE 102015120023
(43) Veröffentlichungstag der Anmeldung: 26.09.2018
(73) Patentinhaber: KEBA Industrial Automation GmbH, 4040 Linz (AT)
(72) Erfinder: MAYR, Franz, 4211 Alberndorf (AT)
(74) Vertreter: Horn Kleimann Waitzhofer Patentanwälte PartG mbB
(86) Internationale Anmeldenummer: PCT/EP2016/072287
(87) Internationale Veröffentlichungsnummer: WO 2017/084789

(56) Entgegenhaltungen:
- DE-A1-102005 040 948
- DE-C1- 10 059 173
- US-A1- 2006 181 239

## Beschreibung

Die vorliegende Erfindung betrifft einen elektrischen Antrieb für einen industriellen Roboter, einen industriellen Roboter mit einem solchen elektrischen Antrieb sowie ein Verfahren zum Betreiben eines solchen elektrischen Antriebs für einen industriellen Roboter. Des Weiteren betrifft die vorliegende Erfindung ein Computerprogrammprodukt zur Durchführung eines solchen Verfahrens zum Betreiben eines elektrischen Antriebs eines industriellen Roboters.

Ein elektrischer Antrieb für einen industriellen Roboter kann einen Wechselrichter mit einer ersten Halbbrücke und einer zweiten Halbbrücke zur Erzeugung einer Drehfeldspannung umfassen. Ein solcher elektrischer Antrieb umfasst ferner eine Steuerelektronik zur Erzeugung von Steuersignalen zur Ansteuerung der Leistungsschalter der ersten und zweiten Halbbrücke sowie einen von dem Wechselrichter über einen Motorstromkreis gespeisten Drehfeldmotor. Eine funktionale Steuerung des Roboters kann Ansteuersignale zur Beeinflussung der Betriebsweise des elektrischen Antriebs bereitstellen. Ferner kann der elektrische Antrieb eine Schnittstelleneinrichtung zum Einspeisen eines Sicherheitssignals zum erzwungenen Abschalten der Drehfeldspannung umfassen.

Beispielsweise beschreibt das Dokument EP 0 742 637 A1 ein Verfahren sowie eine Vorrichtung zum sicheren Abbremsen eines elektrischen Antriebs. Hierbei beschreibt das Dokument EP 0 742 637 A1, dass in der Steuerung eine Möglichkeit zur Herstellung eines integrierten Ankerkurzschlusses geschaffen wird, um im Fehlerfall eine Notbremsung herbeizuführen. Zur Herstellung des integrierten Ankerkurzschlusses wird eine Wechselrichter-Brücke gesperrt, während die andere Wechselrichter-Brücke durch getaktete Ansteuerung einen Kurzschluss der Phasen des elektrischen Antriebs herbeiführt. Durch gezielte Taktung, beispielsweise durch optimale Momentensteuerung über eine Kennlinie, lassen sich Reaktionszeiten und Bremszeit optimieren.

Ferner zeigt das Dokument DE 102 54 608 B4 ein Antriebssystem mit einer integrierten Ankerkurzschlussbremsung, wobei der Ankerkurzschluss im Normalfall dann beendet wird, wenn die zulässigen thermischen Belastungsgrenzen für den Elektromotor oder dessen Ansteuerelektronik erreicht sind.

Außerdem zeigt das Dokument DE 10 2007 059 492 A1 einen Industrieroboter, welcher dazu eingerichtet ist, den elektrischen Motor im Rahmen einer Notbremsung gleichzeitig mittels zwei voneinander unabhängiger elektrischer Strompfade kurzzuschließen.

DE 100 59 173 C1 offenbart eine herkömmliche Antriebssteuerung für einen Drehstrommotor über einen Wechselrichter. Ferner sind aus US 2006/0181239 A1 und DE 10 2005 040 948 A1 herkömmliche Motorsteuerungen bekannt.

Vor diesem Hintergrund besteht eine Aufgabe der vorliegenden Erfindung darin, das Betreiben eines elektrischen Antriebs eines industriellen Roboters insbesondere hinsichtlich Sicherheit zu verbessern.

Gemäß einem ersten Aspekt wird ein elektrischer Antrieb für einen industriellen Roboter nach dem Anspruch 1 vorgeschlagen, wobei der Antrieb einen Wechselrichter mit einer ersten Halbbrücke und einer zweiten Halbbrücke zur Erzeugung einer Drehfeldspannung aus einem Gleichspannungszwischenkreis, eine Steuerelektronik zur Erzeugung von Steuersignalen zur Ansteuerung aller Leistungsschalter der ersten Halbbrücke und aller Leistungsschalter der zweiten Halbbrücke sowie einen von dem Wechselrichter über einen Motorstromkreis gespeisten Drehfeldmotor aufweist. Dabei umfasst der Wechselrichter eine erste Anschlusseinrichtung zur Bereitstellung von Ansteuersignalen zur Beeinflussung der Betriebsweise des Antriebs durch eine funktionale Steuerung des Roboters sowie eine Schnittstelleneinrichtung zum Einspeisen von zumindest einem Sicherheitssignal zum erzwungenen Abschalten der Drehfeldspannung durch eine Sicherheitssteuerung des Roboters. Jedem Leistungsschalter ist eine Treiberschaltung mit einem Optokoppler zugeordnet, welcher einen galvanisch von dem Motorstromkreis getrennten, zweipoligen Steuereingang für den jeweiligen Leistungsschalter ausbildet. Dabei ist die jeweilige Treiberschaltung für die Leistungsschalter der ersten Halbbrücke dazu eingerichtet, bei einem spannungslosen oder stromlosen Zustand des Steuereingangs den jeweils dem Steuereingang zugeordneten Leistungsschalter in einen nicht-leitenden Zustand zu versetzen. Die jeweilige Treiberschaltung für die Leistungsschalter der zweiten Halbbrücke ist dazu eingerichtet, bei einem spannungslosen oder stromlosen Zustand des Steuereingangs den jeweils dem Steuereingang zugeordneten Leistungsschalter in einen leitenden Zustand zu versetzen. Ferner umfasst der elektrische Antrieb eine Schaltvorrichtung, welche dazu eingerichtet ist, mit dem Sicherheitssignal für das erzwungene Abschalten der Drehfeldspannung die Steuereingänge der Optokoppler der Treiberschaltungen für sämtliche Leistungsschalter des Wechselrichters gleichzeitig spannungslos und/oder stromlos zu schalten.

Bei dem vorliegenden elektrischen Antrieb wird durch ein einziges Signal, nämlich das Sicherheitssignal, zum erzwungenen Abschalten der Drehfeldspannung nicht nur die treibende Drehfeldspannung an den Phasen (oder Motoranschlüssen) abgeschaltet, das heißt vollständig von zumindest einem Pol der Gleichstromzwischenkreisspannung, nämlich von der Plusschiene und/oder von der Minusschiene des Gleichspannungszwischenkreises, getrennt, sondern es werden die Phasen auch gleichzeitig kurzgeschlossen, wodurch die Generatorspannung des rotierenden Drehfeldmotors einen Stromfluss in der Drehfeldwicklung des Drehfeldmotors bewirkt, der ein Drehmoment aufbaut, welches der Drehbewegung entgegenwirkt und somit bremsend wirkt. Dieses Bremsmoment kann unterstützend zu einer zusätzlich vorgesehenen mechanischen Bremse des industriellen Roboters genutzt werden.

Von besonderem Vorteil ist, dass das erfolgreiche Herbeiführen dieses Bremszustands nur von der Funktion solcher Komponenten, die Treiberschaltungen für die Leistungsschalter, abhängig ist, die auch bei einem funktional gesteuerten motorischen Betrieb des Antriebs zwingend funktionieren müssen, das heißt, dass das Funktionieren dieser für den Bremszustand benötigten Komponenten ohne besondere Testprozeduren im laufenden Betrieb fortwährend überprüft werden kann, und von der Schaltvorrichtung abhängig ist, welche vorzugsweise redundant, das heißt mehrkreisig, und in sicherer Technologie aufgebaut ist und nur zum Abschalten dient.

Bei einem Defekt einer dieser Komponenten kann entweder kein Drehfeld ausreichender Stärke aufgebaut werden, zum Beispiel ein Leistungsschalter kann nicht mehr leitend geschaltet werden oder eine Motorwicklung ist unterbrochen, oder es entsteht ein Kurzschluss des Gleichspannungszwischenkreises, beispielsweise ein Leistungsschalter kann nicht mehr abgeschaltet werden oder eine Motorwicklung weist einen Kurzschluss auf.

Jeder derartige Fehler kann von dem Wechselrichter erkannt werden und führt zur unmittelbaren Stillsetzung des Antriebs. Diese fortwährende Überprüfung erhöht ganz wesentlich die Wahrscheinlichkeit, dass das zusätzliche Bremsmoment durch den vorliegenden Motorkurzschluss in einem eintretenden Notfall auch tatsächlich zur Verfügung steht.

Insbesondere ist die Ansteuerung der Leistungsschalter während des gesamten Bremszustands statisch, das heißt nicht moduliert, und erfolgt nur durch wenige einfache und bewährte Bauelemente oder Komponenten, wie oben ausgeführt. Somit wird ein zuverlässiges Funktionieren der hier vorgeschlagenen Motorkurzschlussbremse gewährleistet.

Aus diesem Grund werden auch keine komplexen, hoch integrierten Schaltungsteile und insbesondere keine getakteten Mikrocontroller und keine Regelkreise eingesetzt. Dadurch wird die Sicherheit des vorgeschlagenen elektrischen Antriebs wesentlich verbessert. Insbesondere wird die Wahrscheinlichkeit für ein gefährliches Versagen im Bedarfsfall (Notfall) erheblich reduziert. Hierdurch wird es insbesondere auch sicherheitstechnisch zulässig, das gegenüber einer alleinig mechanischen Bremse über den Motorkurzschluss erzielbare zusätzliche Bremsmoment und den damit im Notfall verkürzten Bremsweg bei einer Überwachung der Roboterbewegung durch die Sicherheitssteuerung mit zu berücksichtigen, so dass für den Roboter höhere Bewegungsgeschwindigkeiten in der Nähe von definierten Begrenzungen des Arbeitsraums des Roboters ermöglicht werden.

Der vorliegende elektrische Antrieb kann auch für andere Anwendungen oder Einrichtungen, insbesondere bei hochdynamisch und zyklisch betriebenen Maschinen und Transporteinrichtungen, zum Einsatz kommen. Eine besondere Eignung ergibt sich für solche Anwendungen, bei denen es auf eine kompakte Bauform und ein geringes Gewicht der Motoren ankommt, da durch die sichere elektrische Bremswirkung die mechanische Haltebremse nicht für den dynamischen Bremsfall überdimensioniert werden muss.

Gemäß einer Ausführungsform ist das Sicherheitssignal zweikreisig ausgeführt, wobei die Schaltvorrichtung dazu eingerichtet ist, unabhängig sowohl über den ersten Kreis als auch über den zweiten Kreis die Steuereingänge der Treiberschaltungen gleichzeitig spannungslos und/oder stromlos zu schalten.

Der Signalzustand für das Sicherheitssignal wird redundant über beide Kreise von der Sicherheitssteuerung übermittelt. Dadurch kann das Sicherheitssignal auf technisch besonders zuverlässige Weise von der Sicherheitssteuerung an den Wechselrichter übermittelt werden. Folglich ist eine Stillsetzung des Antriebs auch bei einem einzelnen Fehler in einem der beiden Kreise möglich.

Gemäß einer weiteren Ausführungsform weist die Schnittstelleneinrichtung eine erste Schnittstelle und eine zweite Schnittstelle zum Empfangen eines ersten Sicherheitssignals und eines zu dem ersten Sicherheitssignal redundanten, zweiten Sicherheitssignal von der Sicherheitssteuerung des Roboters auf, wobei mittels des ersten Sicherheitssignals ein erster Schalter der Schaltvorrichtung zum Trennen der Dioden der Optokoppler von Masse betätigt wird und wobei mittels des zweiten Sicherheitssignals ein zweiter Schalter der Schaltvorrichtung zum Trennen der Steuerelektronik zum Treiben der Optokoppler von der Versorgungsspannung betätigt wird.

Hierdurch können die beiden Kreise des Sicherheitssignals über schaltungstechnisch unterschiedliche Mechanismen oder unterschiedliche Eingriffspunkte die Steuereingänge der Treiberschaltungen spannungs- oder stromlos schalten.

Hierdurch wird die Zuverlässigkeit durch einen schaltungstechnisch diversitären Aufbau nochmals erhöht. Eine Fehlerursache, die einen der Eingriffspunkte unwirksam machen würde, zum Beispiel ein Kurzschluss an einer bestimmten Stelle, wirkt sich nicht in gleicher Weise auf den anderen Eingriffspunkt aus, da dieser schaltungstechnisch anders ausgestaltet ist. Folglich wird die Wahrscheinlichkeit für eine erfolgreiche Abschaltung über den weiteren Eingriffspunkt erhöht.

Gemäß einer weiteren Ausführungsform ist die Schalteinrichtung dazu eingerichtet, die Steuereingänge der Treiberschaltungen aller Leistungsschalter bei einem stromlosen oder bei einem gegenüber einem festen Bezugspotential spannungslosen Zustand des Sicherheitssignals gleichzeitig spannungslos und/oder stromlos zu schalten.

Dies ist vorteilhaft, da hierdurch im Falle eines Leitungsbruchs zwischen der Sicherheitssteuerung und dem Wechselrichter automatisch der Antrieb stillgesetzt wird und somit automatisch ein sicherer Zustand herbeigeführt wird.

Gemäß einer weiteren Ausführungsform ist der von dem Wechselrichter gespeiste Drehfeldmotor ein permanenterregter Synchronmotor.

Der permanenterregte Synchronmotor ist besonders geeignet für Roboterantriebe, da er robust, zuverlässig und auch kurzzeitig hochüberlastbar ist, so dass beim Bremsvorgang im Notfall ein hohes Bremsmoment zuverlässig und ohne Beschädigung des Synchronmotors zur Verfügung steht.

Gemäß einer weiteren Ausführungsform umfasst der elektrische Antrieb einen mit dem Drehfeldmotor baulich gekoppelten und elektronisch zugreifbaren Datenspeicher.

Dabei ist die Steuerelektronik des Wechselrichters dazu eingerichtet, den Datenspeicher auszulesen, sobald der Drehfeldmotor betriebsbereit an den Wechselrichter angeschlossen ist, wobei die Steuerelektronik des Wechselrichters dazu eingerichtet ist, die Eignung des Drehfeldmotors in Kombination mit dem Wechselrichter für eine schadlose Kurzschlussbremsung aus in dem Datenspeicher gespeicherten Informationen abzuleiten.

Alternativ oder zusätzlich ist die Sicherheitssteuerung dazu eingerichtet, den Datenspeicher auszulesen, sobald der Drehfeldmotor betriebsbereit an den Wechselrichter angeschlossen ist, wobei die Sicherheitssteuerung dazu eingerichtet ist, die Eignung des Drehfeldmotors in Kombination mit dem Wechselrichter für eine schadlose Kurzschlussbremsung aus in dem Datenspeicher gespeicherten Informationen abzuleiten.

Alternativ oder zusätzlich ist die funktionale Steuerung dazu eingerichtet, den Datenspeicher auszulesen, sobald der Drehfeldmotor betriebsbereit an den Wechselrichter angeschlossen ist, wobei die funktionale Steuerung dazu eingerichtet ist, die Eignung des Drehfeldmotors in Kombination mit dem Wechselrichter für eine schadlose Kurzschlussbremsung aus in dem Datenspeicher gespeicherten Informationen abzuleiten.

Vorteilhafterweise ist hierdurch die Möglichkeit geschaffen, die prinzipielle Eignung eines an den Wechselrichter angeschlossenen Drehfeldmotors in Kombination mit dem jeweiligen Wechselrichter automatisch zu überprüfen. Eine Kurzschlussbremsung aus hoher Drehzahl stellt sowohl für den Wechselrichter als auch für einen Drehfeldmotor eine zwar kurzzeitige, jedoch außerordentlich hohe elektrische, thermische, mechanische und magnetische Belastung dar. Nur bei geeignet aufeinander abgestimmtem Wechselrichter und Drehfeldmotor wird ein solcher Belastungszustand schadlos überstanden und es ist sichergestellt, dass das Bremsmoment des Motors auch zuverlässig zur Verfügung gestellt werden kann. Da der Motor eines elektrischen Antriebs auch nach Inbetriebnahme eines Roboters, etwa im Zuge von Wartungsarbeiten oder Umbauten, durch einen anderen, für eine Kurzschlussbremsung nicht geeigneten Motor ersetzt werden könnte, werden durch die automatisierte Prüfung der Eignung und einer mit einem positiven Prüfungsergebnis verknüpften Freigabe der Roboterbewegung eine Beschädigung des Antriebs sowie ein Verlust der Sicherheit zuverlässig unterbunden.

Gemäß einer weiteren Ausführungsform umfasst der elektrische Antrieb einen mit dem Drehfeldmotor baulich gekoppelten Drehwinkelgeber zur sensorischen Erfassung der absoluten und/oder relativen Winkeländerung einer Motorwelle des Drehfeldmotors. Der Drehwinkelgeber ist über eine Kommunikationsverbindung mit der Steuerelektronik des Wechselrichters und/oder mit der Sicherheitssteuerung und/oder mit der funktionalen Steuerung zur Bestimmung einer Ist-Position einer Motorachse des Drehfeldmotors und/oder einer Roboterachse des Roboters gekoppelt. Dabei ist der elektronisch zugreifbare Datenspeicher baulich und signaltechnisch mit dem Drehwinkelgeber kombiniert.

Hierdurch ist eine besonders vorteilhafte Ausgestaltung gegeben, bei welcher die für die signaltechnische Ankopplung eines mit dem Drehfeldmotor baulich gekoppelten Drehwinkelgebers an das Steuerungssystem ohne dies erforderliche Verkabelung auch gleich zum Auslesen des in dem Drehwinkelgeber integrierten Datenspeichers mit den Motorinformationen genutzt wird und sich somit ein zusätzlicher Verkabelungsaufwand erübrigt.

Gemäß einem zweiten Aspekt wird ein industrieller Roboter mit einem elektrischen Antrieb gemäß dem ersten Aspekt oder gemäß einer der Ausführungsformen des ersten Aspekts vorgeschlagen.

Gemäß einem dritten Aspekt wird ein Verfahren zum Betreiben eines elektrischen Antriebs für einen industriellen Roboter nach dem Anspruch 9, insbesondere eines Antriebs gemäß dem ersten Aspekt, vorgeschlagen. Dabei umfasst der Antrieb einen Wechselrichter mit einer ersten Halbbrücke und einer zweiten Halbbrücke zur Erzeugung einer Drehfeldspannung aus einem Gleichspannungszwischenkreis, eine Steuerelektronik zur Erzeugung von Steuersignalen zur Ansteuerung aller Leistungsschalter der ersten Halbbrücke und aller Leistungsschalter der zweiten Halbbrücke sowie einen von dem Wechselrichter über einen Motorstromkreis gespeisten Drehfeldmotor. Der Wechselrichter umfasst eine erste Anschlusseinrichtung zur Bereitstellung von Ansteuersignalen zur Beeinflussung der Betriebsweise des Antriebs durch eine funktionale Steuerung des Roboters sowie eine Schnittstelleneinrichtung zum Einspeisen von zumindest einem Sicherheitssignal zum erzwungenen Abschalten der Drehfeldspannung durch eine Sicherheitssteuerung des Roboters. Jedem Leistungsschalter ist eine Treiberschaltung mit einem Optokoppler zugeordnet, der einen galvanisch von dem Motorstromkreis getrennten, zweipoligen Steuereingang für den jeweiligen Leistungsschalter ausbildet.

Bei dem Verfahren versetzt die jeweilige Treiberschaltung für die Leistungsschalter der ersten Halbbrücke bei einem spannungslosen oder stromlosen Zustand des Steuereingangs den jeweils dem Steuereingang zugeordneten Leistungsschalter in einen nicht-leitenden Zustand.

Weiter versetzt die jeweilige Treiberschaltung für die Leistungsschalter der zweiten Halbbrücke bei einem spannungslosen oder stromlosen Zustand des Steuereingangs den jeweils dem Steuereingang zugeordneten Leistungsschalter in einen leitenden Zustand.

Ferner werden mit dem Sicherheitssignal für das erzwungene Abschalten der Drehfeldspannung die Steuereingänge der Treiberschaltungen für sämtliche Leistungsschalter des Wechselrichters gleichzeitig spannungslos und/oder stromlos geschaltet.

Gemäß einer Ausführungsform weist der elektrische Antrieb eine mechanische Bremse zur Aufbringung eines Bremsmoments auf die Motorwelle des Drehfeldmotors auf, wobei die mechanische Bremse gleichzeitig mit dem Aufschalten des Sicherheitssignals zur sicheren Stillsetzung aktiviert wird.

Gemäß einer weiteren Ausführungsform überwacht die Sicherheitssteuerung die Bewegung des Roboters hinsichtlich definierter Grenzen für Positionen, Geschwindigkeiten und/oder Beschleunigungen unter Berücksichtigung eines von der Geschwindigkeit abhängigen maximalen Bremswegs. Bei Überschreiten einer für den jeweiligen Bewegungszustand des Roboters ermittelten maximal zulässigen Geschwindigkeit oder bei der Unterschreitung eines für eine aktuelle Geschwindigkeit einzuhaltenden Mindestabstands zu einer Positionsbegrenzung wird das Sicherheitssignal aufgeschaltet, wobei die Summe des von der mechanischen Bremse aufgebrachten garantierten Bremsmomentes und des von dem kurzgeschlossenen Drehfeldmotors aufgebrachten garantierten Bremsmomentes bei der Ermittlung oder Prüfung des von der Geschwindigkeit abhängigen maximalen Bremswegs berücksichtigt wird.

Hierdurch wird eine höhere Verfahrgeschwindigkeit des Roboters in der Nähe von durch die Sicherheitssteuerung überwachten Positionsgrenzen ermöglicht, was zu kürzeren Zykluszeiten und zu einer verbesserten Produktivität führt.

Gemäß einer weiteren Ausführungsform wird die Eignung eines bestimmten Typs eines Drehfeldmotors in Kombination mit einem bestimmten Typ eines Wechselrichters für eine schadlose Durchführung einer Kurzschlussbremsung unter festgelegten Betriebsbedingungen in einem experimentellen Umfeld überprüft. Hierzu werden Informationen in einem mit einem Drehfeldmotor von einem erfolgreich getesteten Typ baulich gekoppelten, elektronisch auslesbaren Datenspeicher abgelegt, wobei aus den abgelegten Informationen die Eignung sowie vorzugsweise die festgelegten Betriebsbedingungen ableitbar sind, so dass im Betrieb mit einem Roboter die Informationen aus dem Datenspeicher von der Steuerelektronik des Wechselrichters und/oder von der Sicherheitssteuerung und/oder von der funktionalen Steuerung ausgelesen und mit dem Typ des verwendeten Wechselrichters abgeglichen werden, wobei bis zur Feststellung eines positiven Prüfergebnisses die Bewegung des Roboters unterbunden wird.

Hierdurch wird die Sicherheit des Roboters verbessert, indem auch bei späteren Revisionen und Wartungsarbeiten an dem Antrieb oder an den Antrieben des Roboters sichergestellt ist, dass nur solche Motortypen in Kombination mit einem bestimmten Typ von Wechselrichter zusammen betrieben werden können, bei denen seitens des Herstellers oder einer unabhängigen Zertifizierungsstelle eine Eignung für die schadlose Durchführung einer Kurzschlussbremsung geprüft und festgestellt wurde.

Die für den vorgeschlagenen elektrischen Antrieb beschriebenen Ausführungsformen und Merkmale gelten für das vorgeschlagene Verfahren entsprechend.

Gemäß einem vierten Aspekt wird ein Computerprogrammprodukt vorgeschlagen, welches auf einer programmgesteuerten Einrichtung die Durchführung des wie oben erläuterten Verfahrens gemäß dem zweiten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Im Weiteren wird die Erfindung anhand von bevorzugten Ausführungsformen unter Bezugnahme auf die beigelegten Figuren näher erläutert.
- Fig. 1: zeigt ein Schaltbild eines Ausführungsbeispiels eines elektrischen Antriebs für einen industriellen Roboter;
- Fig. 2: zeigt ein schematisches Ablaufdiagramm eines ersten Ausführungsbeispiels eines Verfahrens zum Betreiben eines elektrischen Antriebs für einen industriellen Roboter; und
- Fig. 3: zeigt ein schematisches Ablaufdiagramm eines zweiten Ausführungsbeispiels eines Verfahrens zum Betreiben eines elektrischen Antriebs für einen industriellen Roboter.

In den Figuren sind gleiche oder funktionsgleiche Elemente mit denselben Bezugszeichen versehen worden, sofern nichts anderes angegeben ist.

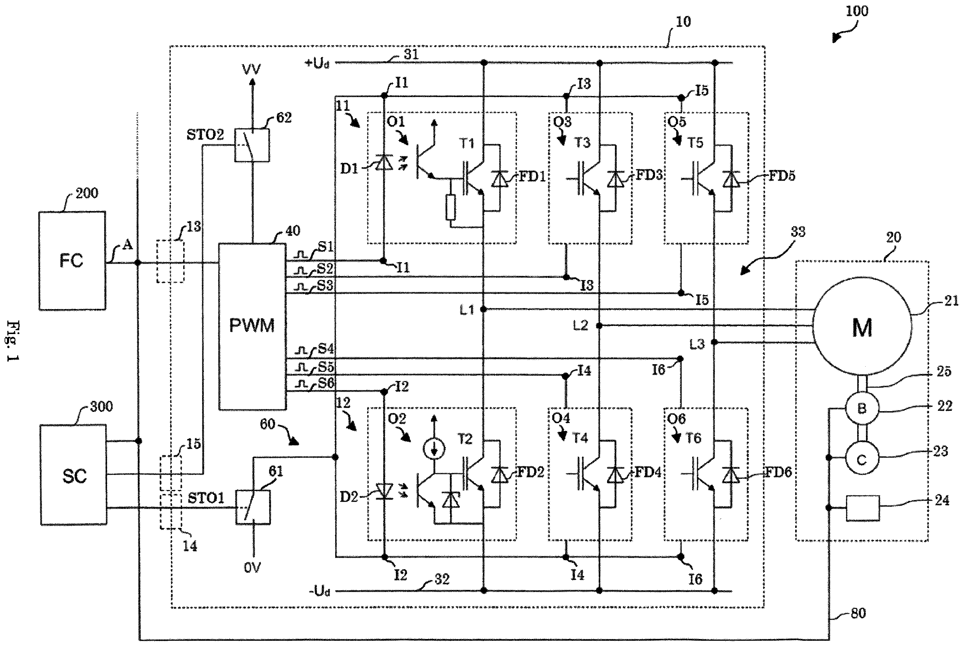

In Fig. 1 ist ein Schaltbild eines Ausführungsbeispiels eines elektrischen Antriebs 100 für einen industriellen Roboter dargestellt.

Der elektrische Antrieb 100 der Fig. 1 umfasst einen Wechselrichter 10, der eine erste Halbbrücke 11 und eine zweite Halbbrücke 12 zur Erzeugung einer Drehfeldspannung aus einem Gleichspannungszwischenkreis aufweist. Die erste Halbbrücke 11 umfasst drei Leistungsschalter T1, T3, T5. Die zweite Halbbrücke 12 umfasst ebenfalls drei Leistungsschalter T2, T4, T6.

Die erste Halbbrücke 11 ist mit einer Plusschiene 31 des Gleichspannungszwischenkreises verbunden. Die zweite Halbbrücke 12 ist mit einer Minusschiene 32 des Gleichspannungszwischenkreises verbunden. Ferner umfasst der jeweilige Leistungsschalter T1 - T6 eine jeweilige Freilaufdiode FD1 - FD6.

Des Weiteren umfasst der Antrieb 100 eine Steuerelektronik 40, beispielsweise eine PWM-Steuerung (PWM; Pulsweitenmodulation). Die Steuerelektronik 40 ist zur Erzeugung von Steuersignale S1 - S6 zur Ansteuerung aller Leistungsschalter T1, T3, T5 der ersten Halbbrücke 11 und aller Leistungsschalter T2, T4, T6 der zweiten Halbbrücke 12 eingerichtet.

Des Weiteren umfasst der elektrische Antrieb 100 einen von dem Wechselrichter 10 über einen Motorstromkreis 33 gespeisten Drehfeldmotor 21.

Insbesondere ist der Drehfeldmotor 21 Teil einer Baugruppe 20. Die Baugruppe 20 umfasst ferner eine mit dem Drehfeldmotor 21 gekoppelte Motorwelle 25, an welcher eine Bremse 22 und ein Drehwinkelgeber 23 vorgesehen sind. Ferner umfasst die Baugruppe 20 einen Datenspeicher 24, welcher beispielsweise als ein ROM-Speicher oder als ein EEPROM-Speicher ausgebildet ist. Beispielsweise ist der Drehfeldmotor 21 ein permanent erregter Synchronmotor.

Der Wechselrichter 10 umfasst ferner eine erste Anschlusseinrichtung 13 zur Bereitstellung von Ansteuersignalen A zur Beeinflussung der Betriebsweise des Antriebs 100 durch eine funktionale Steuerung 200 des Roboters.

Weiter umfasst der Wechselrichter 10 zumindest eine Schnittstelleneinrichtung 14, 15 zum Einspeisen von zumindest einem Sicherheitssignal STO1, STO2 zum erzwungenen Abschalten der Drehfeldspannung durch eine Sicherheitssteuerung 300 des Roboters.

Mit anderen Worten ist der Wechselrichter 10 mit der Sicherheitssteuerung 300 des Roboters mittels der zumindest einen Schnittstelleneinrichtung 14, 15 gekoppelt.

Jedem Leistungsschalter T1 - T6 des Wechselrichters 10 ist eine Treiberschaltung O1 - O6 mit einem galvanisch von dem Motorstromkreis 33 getrennten, zweipoligen Steuereingang I1 - I6 zugeordnet. Beispielsweise ist die Treiberschaltung O1 dem Leistungsschalter T1 zugeordnet und weist den Steuereingang I1 auf. Aus Gründen der Übersichtlichkeit sind in der Fig. 1 nur die Treiberschaltungen O1 und O2 detailliert dargestellt. Die weiteren Treiberschaltungen O3 - O6 sind durch ihre Bezugszeichen angedeutet.

In dem Beispiel der Fig. 1 ist die jeweilige Treiberschaltung als ein Optokoppler O1 - O6 ausgebildet.

Der jeweilige Optokoppler O1, O3, O5 für die Leistungsschalter T1, T3, T5 der ersten Halbbrücke 11 ist dazu eingerichtet, bei einem spannungslosen oder stromlosen Zustand des Steuereingangs I1, I3, I5 den jeweils dem Steuereingang I1, I3, I5 zugeordneten Leistungsschalter T1, T3, T5 in einen nicht-leitenden Zustand zu versetzen. Beispielsweise ist der Optokoppler O1 für den Leistungsschalter T1 der ersten Halbbrücke 11 dazu eingerichtet, bei einem spannungslosen oder stromlosen Zustand des Steuereigangs I1 den dem Steuereingang I1 zugeordneten Leistungsschalter T1 in den nicht-leitenden Zustand zu versetzen.

Außerdem ist der jeweilige Optokoppler O2, O4, O6 für die Leistungsschalter T2, T4, T6 der zweiten Halbbrücke 12 dazu eingerichtet, bei einem spannungslosen oder stromlosen Zustand des Steuereingangs I2, I4, I6 den jeweils dem Steuereingang I2, I4, I6 zugeordneten Leistungsschalter T2, T4, T6 in einen leitenden Zustand zu versetzen.

Des Weiteren umfasst der elektrische Antrieb 100 eine Schaltvorrichtung 60. Die Schaltvorrichtung 60 kann mehrere Schalter 61, 62 umfassen. Die Schaltvorrichtung 60 ist dazu eingerichtet, mit dem Sicherheitssignal STO1, STO2 für das erzwungene Abschalten der Drehfeldspannung die Steuereingänge I1 - I6 der Optokoppler O1 - O6 für sämtliche Leistungsschalter T1 - T6 des Wechselrichters 10 gleichzeitig spannungslos und/oder stromlos zu schalten.

Insbesondere ist das Sicherheitssignal STO1, STO2 - wie in Fig. 1 gezeigt - zweikreisig ausgeführt. Dabei ist die Schaltvorrichtung 60 dazu eingerichtet, unabhängig sowohl über den ersten Kreis STO1 also auch über den zweiten Kreis STO2 die Steuereingänge I1 - I6 der Optokoppler O1 - O6 gleichzeitig spannungslos und/oder stromlos zu schalten.

Dabei umfasst die Schnittstelleneinrichtung 14, 15 vorzugsweise eine erste Schnittstelle 14 und eine zweite Schnittstelle 15 zum Empfangen eines ersten Sicherheitssignals STO1 und eines zu dem ersten Sicherheitssignal STO1 redundanten, zweiten Sicherheitssignals STO2 von der Sicherheitssteuerung 300 des Roboters. Mittels des ersten Sicherheitssignals STO1 wird ein erster Schalter 61 der Schaltvorrichtung 60 zum Trennen der Dioden D1 - D6 der Optokoppler O1-O6 von Masse 0V betätigt. Wie oben bereits erwähnt, sind die Optokoppler O3 - O6 und damit die Dioden D3 - D6 in Fig. 1 nur angedeutet. Mittels des zweiten Sicherheitssignals STO2 wird ein zweiter Schalter 62 der Schaltvorrichtung 60 zum Trennen der Steuerelektronik 40 zum Treiben der Optokoppler O1 - O6 von der Versorgungsspannung VV betätigt.

Insbesondere ist die Schalteinrichtung 60 dabei dazu eingerichtet, die Steuereingänge I1 - I6 der Optokoppler O1 - O6 aller Leistungsschalter T1 - T6 bei einem stromlosen oder bei einem gegenüber einem festen Bezugspotential spannungslosen Zustand des Sicherheitssignals STO1, STO2 gleichzeitig spannungslos und/oder stromlos zu schalten.

Wie oben bereits ausgeführt, umfasst der elektrische Antrieb 100 auch einen Datenspeicher 24, welcher mit dem Drehfeldmotor 21 in der Baugruppe 20 baulich gekoppelt ist und ferner elektronisch zugreifbar ist. Auf den Datenspeicher 24 kann beispielsweise durch die Steuerelektronik 40 des Wechselrichters 10, durch die Sicherheitssteuerung 300 und/oder durch die funktionale Steuerung 200 elektronisch zugegriffen werden. Hierfür ist eine Kommunikationsverbindung 80 vorgesehen. Das gepunktete Ende der Kommunikationsverbindung 80 in der Fig. 1 illustriert, dass an der Kommunikationsverbindung 80 auch noch weitere Einheiten, beispielsweise Steuereinheiten, angebunden werden können. Die Kommunikationsverbindung 80 ist beispielsweise ein Bus.

Dabei ist die Steuerelektronik 40 und/oder die Sicherheitssteuerung 300 und/oder die funktionale Steuerung 200 dazu eingerichtet, den Datenspeicher 24 über die Kommunikationsverbindung 80 auszulesen, sobald der Drehfeldmotor 21 betriebsbereit an den Wechselrichter 10 angeschlossen ist. Ferner ist die Steuerelektronik 40 und/oder die Sicherheitssteuerung 300 und/oder die funktionale Steuerung 200 dazu eingerichtet, die Eignung des Drehfeldmotors 21 in Kombination mit dem Wechselrichter 10 für eine schadlose Kurzschlussbremsung aus in dem Datenspeicher 24 gespeicherten Informationen abzuleiten.

Des Weiteren ist, wie oben bereits ausgeführt, ein Drehwinkelgeber 23 in der Baugruppe 20 angeordnet. Der Drehwinkelgeber 23 ist mit dem Drehfeldmotor 21 gekoppelt. Der Drehwinkelgeber 23 ist dazu eingerichtet, eine absolute und/oder eine relative Winkeländerung der Motorwelle 25 des Drehfeldmotors 21 sensorisch zu erfassen. Auch der Drehwinkelgeber 23 kann über die Kommunikationsverbindung 80 mit der Steuerelektronik 40 des Wechselrichters 10 und/oder mit der Sicherheitssteuerung 300 und/oder mit der funktionalen Steuerung 200 zur Bestimmung einer Ist-Position einer Motorachse des Drehfeldmotors 21 und/oder einer Roboterachse des Roboters gekoppelt sein.

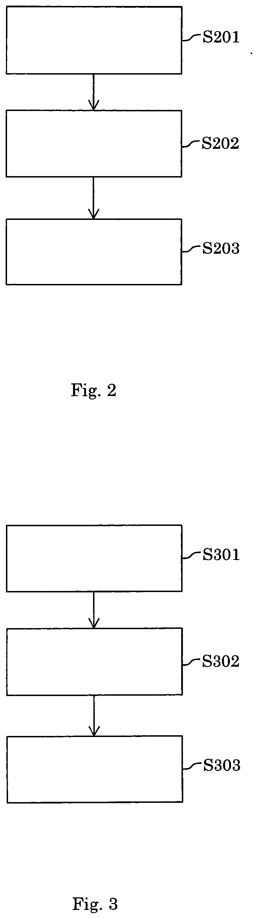

In Fig. 2 ist ein schematisches Ablaufdiagramm eines ersten Ausführungsbeispiels eines Verfahrens zum Betreiben eines elektrischen Antriebs 100 für einen industriellen Roboter dargestellt. Ein Beispiel eines solchen elektrischen Antriebs 100 ist in Fig. 1 dargestellt.

Das beispielhafte Verfahren der Fig. 2 umfasst die folgenden Schritte S201, S202 und S203:
In Schritt S201 versetzt die jeweilige Treiberschaltung O1, O3, O5 für die Leistungsschalter T1, T3, T5 der ersten Halbbrücke 11 bei einem spannungslosen oder stromlosen Zustand des Steuereingangs I1, I3, I5 den jeweils dem Steuereingang I1, I3, I5 zugeordneten Leistungsschalter T1, T3. T5 in einen nicht-leitenden Zustand.

In Schritt S202 versetzt die jeweilige Treiberschaltung O2, O4, O6 für die Leistungsschalter T2, T4, T6 der zweiten Halbbrücke 12 bei einem spannungslosen oder stromlosen Zustand des Steuereingangs I2, I4, I6 den jeweils dem Steuereingang I2, I4, I6 zugeordneten Leistungsschalter T2, T4, T6 in einen leitenden Zustand.

In Schritt S203 werden mit dem Sicherheitssignal STO1, STO2 für das erzwungene Abschalten der Drehfeldspannung die Steuereingänge I1 - I6 der Treiberschaltungen O1 - O6 für sämtliche Leistungsschalter T1 - T6 des Wechselrichters 10 gleichzeitig spannungslos und/oder stromlos geschaltet.

Die in der Fig. 2 dargestellte Abfolge der Schritte S201, S202 und S203 ist nur beispielhaft und stellt insbesondere keine zeitliche Abfolge dar. Insbesondere kann der Schritt S203 als erster Schritt durchgeführt werden.

Wie in Fig. 1 dargestellt, kann der elektrische Antrieb 100 eine mechanische Bremse 22 zur Aufbringung eines Bremsmoments auf die Motorwelle 25 des Drehfeldmotors 21 aufweisen. Insbesondere wird dabei die mechanische Bremse 22 gleichzeitig mit dem Aufschalten des Sicherheitssignals STO1, STO2 zur sicheren Stillsetzung aktiviert.

Des Weiteren überwacht die Sicherheitssteuerung 300 vorzugsweise die Bewegung des Roboters hinsichtlich definierter Grenzen für Positionen, Geschwindigkeiten und/oder Beschleunigungen unter Berücksichtigung eines von der Geschwindigkeit abhängigen maximalen Bremswegs. Bei Überschreiten einer für den jeweiligen Bremszustand des Roboters ermittelten maximal zulässigen Geschwindigkeit oder bei der Unterschreitung eines für eine aktuelle Geschwindigkeit einzuhaltenden Mindestabstands zu einer Positionsbegrenzung wird das Sicherheitssignal STO1, STO2 aufgeschaltet. Dabei wird vorzugsweise die Summe des von der mechanischen Bremse 22 aufgebrachten garantierten Bremsmoments und des von dem kurzgeschlossenen Drehfeldmotor 21 aufgebrachten garantierten Bremsmoments bei der Ermittlung oder Prüfung des von der Geschwindigkeit abhängigen maximalen Bremswegs berücksichtigt.

Fig. 3 zeigt ein schematisches Ablaufdiagramm eines zweiten Ausführungsbeispiels eines Verfahrens zum Betreiben eines elektrischen Antriebs 100 für einen industriellen Roboter. Ein Beispiel eines solchen elektrischen Antriebs 100 ist in Fig. 1 dargestellt.

Das beispielhafte Verfahren der Fig. 3 umfasst die folgenden Schritte S301, S302 und S303: In Schritt S301 wird die Eignung eines bestimmten Typs eines Drehfeldmotors 21 in Kombination mit einem bestimmten Typ eines Wechselrichters 10 für eine schadlose Durchführung einer Kurzschlussbremsung unter festgelegten Betriebsbedingungen in einem experimentellen Umfeld überprüft. Insbesondere wird eine Mehrzahl von Typen von Drehfeldmotoren mit einer Mehrzahl von Typen von Wechselrichtern geprüft und zulässige Paare aus einem Typ eines Drehfeldmotors und einem Typ eines Wechselrichters bestimmt.

In Schritt S302 werden hierzu Informationen in einem mit einem Drehfeldmotor 21 von einem erfolgreich getesteten Typ baulich koppelbaren, elektronisch auslesbaren Datenspeicher 24 abgelegt.

In Schritt S303 wird aus den abgelegten Informationen die Eignung sowie vorzugsweise die festgelegten Betriebsbedingungen abgeleitet, so dass im Betrieb mit einem Roboter die Informationen aus dem Datenspeicher 23 von der Steuerelektronik 40 des Wechselrichters 10 und/oder von der Sicherheitssteuerung 300 des Roboters und/oder von der funktionalen Steuerung 200 des Roboters ausgelesen werden und mit dem Typ des verwendeten Wechselrichters 10 abgeglichen werden, wobei bis zur Feststellung eines positiven Prüfergebnisses die Bewegung des Roboters unterbunden wird.

Obwohl die vorliegende Erfindung anhand von Ausführungsbeispielen beschrieben wurde, ist sie vielfältig modifizierbar.

### BEZUGSZEICHENLISTE

- 0V: Masse
- 10: Wechselrichter
- 11: erste Halbbrücke
- 12: zweite Halbbrücke
- 13: Anschlusseinrichtung
- 14: erste Schnittstelle
- 15: zweite Schnittstelle
- 20: Baugruppe
- 21: Drehfeldmotor
- 22: Bremse
- 23: Drehwinkelgeber
- 24: Datenspeicher
- 25: Motorwelle
- 31: Plusschiene
- 32: Minusschiene
- 33: Motorstromkreis
- 40: Steuerelektronik
- 60: Schaltvorrichtung
- 61: erster Schalter
- 62: zweiter Schalter
- 80: Kommunikationsverbindung
- 100: elektrischer Antrieb
- 200: funktionale Steuerung
- 300: Sicherheitssteuerung
- A: Ansteuersignal
- D1: Diode
- D2: Diode
- D3: Diode
- D4: Diode
- D5: Diode
- D6: Diode
- FD1: Freilaufdiode
- FD2: Freilaufdiode
- FD3: Freilaufdiode
- FD4: Freilaufdiode
- FD5: Freilaufdiode
- FD6: Freilaufdiode
- I1: zweipoliger Steuereingang
- I2: zweipoliger Steuereingang
- I3: zweipoliger Steuereingang
- I4: zweipoliger Steuereingang
- I5: zweipoliger Steuereingang
- I6: zweipoliger Steuereingang
- L1: Phase
- L2: Phase
- L3: Phase
- O1: Optokoppler
- O2: Optokoppler
- O3: Optokoppler
- O4: Optokoppler
- O5: Optokoppler
- O6: Optokoppler
- S1: Steuersignal
- S2: Steuersignal
- S3: Steuersignal
- S4: Steuersignal
- S5: Steuersignal
- S6: Steuersignal
- STO1: Sicherheitssignal
- STO2: Sicherheitssignal
- T1: Leistungsschalter
- T2: Leistungsschalter
- T3: Leistungsschalter
- T4: Leistungsschalter
- T5: Leistungsschalter
- T6: Leistungsschalter
- VV: Versorgungsspannung

## Patentansprüche

1. Elektrischer Antrieb (100) für einen industriellen Roboter, wobei der Antrieb (100) einen Wechselrichter (10) mit einer ersten Halbbrücke (11) und einer zweiten Halbbrücke (12) zur Erzeugung einer Drehfeldspannung aus einem Gleichspannungszwischenkreis, eine Steuerelektronik (40) zur Erzeugung von Steuersignalen (S1 - S6) zur Ansteuerung aller Leistungsschalter (T1, T3, T5) der ersten Halbbrücke (11) und aller Leistungsschalter (T2, T4, T6) der zweiten Halbbrücke (12) sowie einen von dem Wechselrichter (10) über einen Motorstromkreis (33) gespeisten Drehfeldmotor (21) aufweist,
wobei der Wechselrichter (10) eine erste Anschlusseinrichtung (13) zur Bereitstellung von Ansteuersignalen (A) zur Beeinflussung der Betriebsweise des Antriebs (100) durch eine funktionale Steuerung (200) des Roboters sowie eine Schnittstelleneinrichtung (14, 15) zum Einspeisen von zumindest einem Sicherheitssignal (STO1, STO2) zum erzwungenen Abschalten der Drehfeldspannung durch eine Sicherheitssteuerung (300) des Roboters aufweist,
wobei jedem Leistungsschalter (T1 - T6) eine Treiberschaltung (O1 - O6) mit einem Optokoppler zugeordnet ist, welcher Optokoppler einen galvanisch von dem Motorstromkreis (33) getrennten, zweipoligen Steuereingang (I1 - I6) für den jeweiligen Leistungsschalter (T1 - T6) ausbildet,
wobei die jeweilige Treiberschaltung (O1, O3, O5) für die Leistungsschalter (T1, T3, T5) der ersten Halbbrücke (11) dazu eingerichtet ist, bei einem spannungslosen oder stromlosen Zustand des zweipoligen Steuereingangs (I1, I3, I5) des der jeweiligen Treiberschaltung (O1, O3, O5) zugeordneten Optokopplers den jeweils der Treiberschaltung (O1, O3, O5) zugeordneten Leistungsschalter (T1, T3, T5) in einen nicht-leitenden Zustand zu versetzen,
**dadurch gekennzeichnet,**
**dass** die jeweilige Treiberschaltung (O2, O4, O6) für die Leistungsschalter (T2, T4, T6) der zweiten Halbbrücke (12) dazu eingerichtet ist, bei einem spannungslosen oder stromlosen Zustand des zweipoligen Steuereingangs (I2, I4, I6) des der jeweiligen Treiberschaltung (O2, O4, O6) zugeordneten Optokopplers den jeweils der Treiberschaltung (O2, O4, O6) zugeordneten Leistungsschalter (T2, T4, T6) in einen leitenden Zustand zu versetzen, und
**dass** eine Schaltvorrichtung (60) vorgesehen ist, welche dazu eingerichtet ist, mit dem Sicherheitssignal (STO1, STO2) für das erzwungene Abschalten der Drehfeldspannung die zweipoligen Steuereingänge (I1 - I6) der Optokoppler der Treiberschaltungen (O1 - O6) für sämtliche Leistungsschalter (T1 - T6) des Wechselrichters (10) gleichzeitig spannungslos und/oder stromlos zu schalten.

2. Elektrischer Antrieb nach Anspruch 1,
**dadurch gekennzeichnet,**
**dass** das Sicherheitssignal (STO1, STO2) zweikreisig ausgeführt ist, wobei die Schaltvorrichtung (60) dazu eingerichtet ist, unabhängig sowohl über den ersten Kreis (STO1) als auch über den zweiten Kreis (STO2) die zweipoligen Steuereingänge (I1 -I6) der Optokoppler der Treiberschaltungen (O1 - O6) gleichzeitig spannungslos und/oder stromlos zu schalten.

3. Elektrischer Antrieb nach Anspruch 1 oder 2,
**dadurch gekennzeichnet,**
**dass** die Schnittstelleneinrichtung (14, 15) eine erste Schnittstelle (14) und eine zweite Schnittstelle (15) zum Empfangen eines ersten Sicherheitssignals (STO1) und eines zu dem ersten Sicherheitssignal (STO1) redundanten, zweiten Sicherheitssignal (STO2) von der Sicherheitssteuerung (300) des Roboters aufweist, wobei mittels des ersten Sicherheitssignals (STO1) ein erster Schalter (61) der Schaltvorrichtung (60) zum Trennen der Dioden (D1 - D6) der Optokoppler (O1-O6) von Masse (0V) betätigt wird und wobei mittels des zweiten Sicherheitssignals (STO2) ein zweiter Schalter (62) der Schaltvorrichtung (60) zum Trennen der Steuerelektronik (40) zum Treiben der Optokoppler (O1 - O6) von der Versorgungsspannung (VV) betätigt wird.

4. Elektrischer Antrieb nach einem der Ansprüche 1 bis 3,
**dadurch gekennzeichnet,**
**dass** die Schalteinrichtung (60) dazu eingerichtet ist, die zweipoligen Steuereingänge (I1 - I6) der Optokoppler der Treiberschaltungen (O1 - O6) aller Leistungsschalter (T1 - T6) bei einem stromlosen oder bei einem gegenüber einem festen Bezugspotential spannungslosen Zustand des Sicherheitssignals (STO1, STO2) gleichzeitig spannungslos und/oder stromlos zu schalten.

5. Elektrischer Antrieb nach einem der Ansprüche 1 bis 4,
**dadurch gekennzeichnet,**
**dass** der von dem Wechselrichter (10) gespeiste Drehfeldmotor (21) ein permanenterregter Synchronmotor ist.

6. Elektrischer Antrieb nach einem der Ansprüche 1 bis 5,
**dadurch gekennzeichnet,**
**dass** ein mit dem Drehfeldmotor (21) baulich gekoppelter und elektronisch zugreifbarer Datenspeicher (24) vorgesehen ist, wobei die Steuerelektronik (40) des Wechselrichters (10) und/oder die Sicherheitssteuerung (300) und/oder die funktionale Steuerung (200) dazu eingerichtet ist, den Datenspeicher (24) auszulesen, sobald der Drehfeldmotor (21) betriebsbereit an den Wechselrichter (10) angeschlossen ist, wobei die Steuerelektronik (40) des Wechselrichters (10) und/oder die Sicherheitssteuerung (300) und/oder die funktionale Steuerung (200) dazu eingerichtet ist, die Eignung des Drehfeldmotors (21) in Kombination mit dem Wechselrichter (10) für eine schadlose Kurzschlussbremsung aus in dem Datenspeicher (24) gespeicherten Informationen abzuleiten.

7. Elektrischer Antrieb nach einem der Ansprüche 1 bis 6,
**dadurch gekennzeichnet,**
**dass** ein mit dem Drehfeldmotor (21) baulich gekoppelter Drehwinkelgeber (23) zur sensorischen Erfassung der absoluten und/oder relativen Winkeländerung einer Motorwelle (25) des Drehfeldmotors (21) vorgesehen ist, welcher über eine Kommunikationsverbindung (80) mit der Steuerelektronik (40) des Wechselrichters (10) und/oder mit der Sicherheitssteuerung (300) und/oder mit der funktionalen Steuerung (200) zur Bestimmung einer Ist-Position einer Motorachse des Drehfeldmotors (21) und/oder einer Roboterachse des Roboters gekoppelt ist, wobei der elektronisch zugreifbare Datenspeicher (24) baulich und signaltechnisch mit dem Drehwinkelgeber (23) kombiniert ist.

8. Industrieller Roboter mit einem elektrischen Antrieb (100) nach einem der Ansprüche 1 bis 7.

9. Verfahren zum Betreiben eines elektrischen Antriebs (100) für einen industriellen Roboter, insbesondere eines Antriebs (100) nach einem der Ansprüche 1 bis 8, wobei der Antrieb (100) einen Wechselrichter (10) mit einer ersten Halbbrücke (11) und einer zweiten Halbbrücke (12) zur Erzeugung einer Drehfeldspannung aus einem Gleichspannungszwischenkreis, eine Steuerelektronik (40) zur Erzeugung von Steuersignalen (S1 - S6) zur Ansteuerung aller Leistungsschalter (T1, T3, T5) der ersten Halbbrücke (11) und aller Leistungsschalter (T2, T4, T6) der zweiten Halbbrücke (12) sowie einen von dem Wechselrichter (10) über einen Motorstromkreis (33) gespeisten Drehfeldmotor (21) aufweist, wobei der Wechselrichter (10) eine erste Anschlusseinrichtung (13) zur Bereitstellung von Ansteuersignalen (A) zur Beeinflussung der Betriebsweise des Antriebs (100) durch eine funktionale Steuerung (200) des Roboters sowie eine Schnittstelleneinrichtung (14, 15) zum Einspeisen von zumindest einem Sicherheitssignal (STO1, STO2) zum erzwungenen Abschalten der Drehfeldspannung durch eine Sicherheitssteuerung (300) des Roboters aufweist, wobei jedem Leistungsschalter (T1 - T6) eine Treiberschaltung (O1 - O6) mit einem Optokoppler zugeordnet ist, welcher Optokoppler einen galvanisch von dem Motorstromkreis (33) getrennten, zweipoligen Steuereingang (I1 - I6) für den jeweiligen Leistungsschalter (T1 - T6) ausbildet,
wobei die jeweilige Treiberschaltung (O1, O3, O5) für die Leistungsschalter (T1, T3, T5) der ersten Halbbrücke (11) bei einem spannungslosen oder stromlosen Zustand des zweipoligen Steuereingangs (I1, I3, I5) des der jeweiligen Treiberschaltung (O1, O3, O5) zugeordneten Optokopplers den jeweils der Treiberschaltung (O1, O3, O5) zugeordneten Leistungsschalter (T1, T3, T5) in einen nicht-leitenden Zustand versetzt,
**dadurch gekennzeichnet,**
**dass** die jeweilige Treiberschaltung (O2, O4, O6) für die Leistungsschalter (T2, T4, T6) der zweiten Halbbrücke (12) bei einem spannungslosen oder stromlosen Zustand des zweipoligen Steuereingangs (I2, I4, I6) des der jeweiligen Treiberschaltung (O2, O4, O6) zugeordneten Optokopplers den jeweils der Treiberschaltung (O2, O4, O6) zugeordneten Leistungsschalter (T2, T4, T6) in einen leitenden Zustand versetzt, und
**dass** mit dem Sicherheitssignal (STO1, STO2) für das erzwungene Abschalten der Drehfeldspannung die zweipoligen Steuereingänge (I1 - I6) der Optokoppler der Treiberschaltungen (O1 - O6) für sämtliche Leistungsschalter (T1 - T6) des Wechselrichters (10) gleichzeitig spannungslos und/oder stromlos geschaltet werden.

10. Verfahren nach Anspruch 9,
**dadurch gekennzeichnet,**
**dass** der elektrische Antrieb (100) eine mechanische Bremse (22) zur Aufbringung eines Bremsmoments auf die Motorwelle (25) des Drehfeldmotors (21) aufweist und dass die mechanische Bremse (22) gleichzeitig mit dem Aufschalten des Sicherheitssignals (STO1, STO2) zur sicheren Stillsetzung aktiviert wird.

11. Verfahren nach Anspruch 10,
**dadurch gekennzeichnet,**
**dass** die Sicherheitssteuerung (300) die Bewegung des Roboters hinsichtlich definierter Grenzen für Positionen, Geschwindigkeiten und/oder Beschleunigungen unter Berücksichtigung eines von der Geschwindigkeit abhängigen maximalen Bremswegs überwacht und bei Überschreiten einer für den jeweiligen Bewegungszustand des Roboters ermittelten maximal zulässigen Geschwindigkeit und/oder bei der Unterschreitung eines für eine aktuelle Geschwindigkeit einzuhaltenden Mindestabstands zu einer Positionsbegrenzung das Sicherheitssignal (STO1, STO2) aufschaltet, wobei die Summe des von der mechanischen Bremse (22) aufgebrachten garantierten Bremsmomentes und des von dem kurzgeschlossenen Drehfeldmotor (21) aufgebrachten garantierten Bremsmomentes bei der Ermittlung oder Prüfung des von der Geschwindigkeit abhängigen maximalen Bremswegs berücksichtigt wird.

12. Verfahren nach einem der Ansprüche 9 bis 11,
**dadurch gekennzeichnet,**
**dass** die Eignung eines bestimmten Typs eines Drehfeldmotors (21) in Kombination mit einem bestimmten Typ eines Wechselrichters (10) für eine schadlose Durchführung einer Kurzschlussbremsung unter festgelegten Betriebsbedingungen in einem experimentellen Umfeld überprüft wird und hierzu Informationen in einem mit einem Drehfeldmotor (21) von einem erfolgreich getesteten Typ baulich gekoppelten, elektronisch auslesbaren Datenspeicher (24) abgelegt werden, wobei aus den abgelegten Informationen die Eignung sowie vorzugsweise die festgelegten Betriebsbedingungen ableitbar sind, so dass im Betrieb mit einem Roboter die Informationen aus dem Datenspeicher (23) von der Steuerelektronik (40) des Wechselrichters (10) und/oder von der Sicherheitssteuerung (300) und/oder von der funktionalen Steuerung (200) ausgelesen und mit dem Typ des verwendeten Wechselrichters (10) abgeglichen werden, wobei bis zur Feststellung eines positiven Prüfergebnisses die Bewegung des Roboters unterbunden wird.

13. Computerprogrammprodukt, welches auf einer programmgesteuerten Einrichtung die Durchführung des Verfahrens nach einem der Ansprüche 9 bis 12 veranlasst.

## Claims

1. Electric drive (100) for an industrial robot, wherein the drive (100) comprises an inverter (10) with a first half-bridge (11) and a second half-bridge (12) for generating a rotating field voltage from a DC intermediate circuit, a control electronics (40) for generating control signals (S1 - S6) for actuating all of the power switches (T1, T3, T5) of the first half-bridge (11) and all of the power switches (T2, T4, T6) of the second half-bridge (12), and a rotary field motor (21) energized by the inverter (10) by means of a motor electric circuit (33),
wherein the inverter (10) comprises a first connection device (13) for providing control signals (A) for influencing the operational mode of the drive (100) by a functional controller (200) of the robot, and an interface device (14, 15) for supplying at least one safety signal (STO1, STO2) for a forced disconnection of the rotating field voltage by a safety controller (300) of the robot,
wherein a driver circuit (O1 - O6) with an optocoupler is assigned to each power switch (T1 -T6), which optocoupler forms a two-pole control input (I1 - I6) for the respective power switch (T1 - T6), which is galvanically isolated from the motor electric circuit (33),
wherein the respective driver circuit (O1, O3, O5) for the power switches (T1, T3, T5) of the first half-bridge (11) is configured to set the power switch (T1, T3, T5) respectively assigned to the driver circuit (O1, O3, O5) to a non-conducting state when the two-pole control input (I1, I3, I5) of the optocoupler assigned to the respective driver circuit (O1, O3, O5) is in a voltage-free or current-free state,
**characterized in that**
the respective driver circuit (O2, O4, O6) for the power switches (T2, T4, T6) of the second half-bridge (12) is configured to set the power switch (T2, T4, T6) respectively assigned to the driver circuit (O2, O4, O6) to a conductive state when the two-pole control input (I2, I4, I6) of the optocoupler assigned to the respective driver circuit (O2, O4, O6) is in a voltage-free or current-free state, and
a switching device (60) is provided which is configured to use the safety signal (STO1, STO2) for the forced disconnection of the rotating field voltage to simultaneously switch the two-pole control inputs (I1 - I6) of the optocouplers of the driver circuits (O1 - O6) for all of the power switches (T1 -T6) of the inverter (10) to a voltage-free and/or current-free state.

2. Electric drive according to claim 1,
**characterized in that**
the safety signal (STO1, STO2) is implemented as a dual circuit, wherein the switching device (60) is configured to independently switch, both by means of the first circuit (STO1) as well as by means of the second circuit (STO2), the two-pole control inputs (I1 - I6) of the optocouplers of the driver circuits (O1 - O6) simultaneously to a voltage-free and/or current-free state.

3. Electric drive according to claim 1 or 2,
**characterized in that**
the interface device (14, 15) has a first interface (14) and a second interface (15) for receiving a first safety signal (STO1) and a second safety signal (STO2) which is redundant to the first safety signal (STO1) from the safety controller (300) of the robot, wherein by means of the first safety signal (STO1) a first switch (61) of the switching device (60) is actuated for disconnecting the diodes (D1 - D6) of the optocouplers (O1 - O6) from the ground (0V), and wherein by means of the second safety signal (STO2) a second switch (62) of the switching device (60) is actuated for disconnecting the control electronics (40) for driving the optocouplers (O1 - O6) from the supply voltage (VV).

4. Electric drive according to one of claims 1 to 3,
**characterized in that**
the switching device (60) is configured to switch the two-pole control inputs (I1 - I6) of the optocouplers of the driver circuits (O1 - O6) of all of the power switches (T1 -T6) simultaneously voltage-free and/or current-free when the safety signal (STO1, STO2) is in a current-free state or in a voltage-free state with respect to a fixed reference potential.

5. Electric drive according to one of claims 1 to 4,
**characterized in that**
the rotating field motor (21) energized by the inverter (10) is a permanently excited synchronous motor.

6. Electric drive according to one of claims 1 to 5,
**characterized in that**
a data memory (24) structurally coupled to the rotating field motor (21) and electronically accessible is provided, wherein the control electronics (40) of the inverter (10) and/or the safety controller (300) and/or the functional controller (200) is configured to read out the data memory (24) as soon as the rotating field motor (21) is connected to the inverter (10) ready-to-operate, wherein the control electronics (40) of the inverter (10) and/or the safety controller (300) and/or the functional controller (200) is configured to derive the suitability of the rotating field motor (21) in combination with the inverter (10) for a damage-free short-circuit braking from information stored in the data memory (24).

7. Electric drive according to one of claims 1 to 6,
**characterized in that**
a rotary angle encoder (23) structurally coupled to the rotary field motor (21) is provided for sensory detection of the absolute and/or relative angular change of a motor shaft (25) of the rotary field motor (21), which is coupled by means of a communication link (80) to the control electronics (40) of the inverter (10) and/or to the safety controller (300) and/or to the functional controller (200) for determining an actual position of a motor axis of the rotary field motor (21) and/or of a robot axis of the robot, wherein the electronically accessible data memory (24) is structurally and in terms of signals combined with the rotary angle encoder (23).

8. Industrial robot having an electric drive (100) according to one of claims 1 to 7.

9. Method for operating an electric drive (100) for an industrial robot, in particular a drive (100) according to one of claims 1 to 8, wherein the drive (100) comprises an inverter (10) with a first half-bridge (11) and a second half-bridge (12) for generating a rotating field voltage from a DC intermediate circuit, a control electronics (40) for generating control signals (S1 - S6) for actuating all of the power switches (T1, T3, T5) of the first half-bridge (11) and all of the power switches (T2, T4, T6) of the second half-bridge (12), and a rotary field motor (21) energized by the inverter (10) by means of a motor electric circuit (33), wherein the inverter (10) comprises a first connection device (13) for providing control signals (A) for influencing the operational mode of the drive (100) by a functional controller (200) of the robot, and an interface device (14, 15) for feeding at least one safety signal (STO1, STO2) for a forced disconnection of the rotating field voltage by a safety controller (300) of the robot, wherein a driver circuit (O1 - O6) with an optocoupler is assigned to each power switch (T1 -T6), which optocoupler forms a two-pole control input (I1 - I6), which is electrically isolated from the motor electric circuit (33), for the respective power switch (T1 - T6),
wherein the respective driver circuit (O1, O3, O5) for the power switch (T1, T3, T5) of the first half-bridge (11) sets the power switch (T1, T3, T5) respectively assigned to the driver circuit (O1, O3, O5) to a non-conducting state when the two-pole control input (I1, I3, I5) of the optocoupler assigned to the respective driver circuit (O1, O3, O5) is in a voltage-free or current-free state,
**characterized in that**
the respective driver circuit (O2, O4, O6) for the power switches (T2, T4, T6) of the second half-bridge (12) sets the power switch (T2, T4, T6) respectively assigned to the driver circuit (O2, O4, O6) to a conductive state when the two-pole control input (I2, I4, I6) of the optocoupler assigned to the respective driver circuit (O2, O4, O6) is in a voltage-free or current-free state, and
the two-pole control inputs (l1 - I6) of the optocouplers of the driver circuits (O1 - O6) for all of the power switches (T1 - T6) of the inverter (10) are simultaneously switched voltage-free and/or current-free by the safety signal (STO1, STO2) for the forced disconnection of the rotating field voltage.

10. Method according to claim 9,
**characterized in that**
the electric drive (100) comprises a mechanical brake (22) for applying a braking torque to the motor shaft (25) of the rotary field motor (21), and the mechanical brake (22) is activated simultaneously with the application of the safety signal (STO1, STO2) for the safe shutdown.

11. Method according to claim 10,
**characterized in that**
the safety controller (300) monitors the movement of the robot with regard to defined limits for positions, speeds and/or accelerations, taking into account a maximum braking distance which is dependent on the speed, and applies the safety signal (STO1, STO2) if a maximum permissible speed determined for the respective state of movement of the robot is exceeded and/or if a minimum distance to a position limit to be maintained for a current speed is not reached, wherein the sum of the guaranteed braking torque applied by the mechanical brake (22) and the guaranteed braking torque applied by the short-circuited rotating field motor (21) is taken into account when determining or checking the maximum braking distance dependent on the speed.

12. Method according to one of claims 9 to 11,
**characterized in that**
the suitability of a specific type of a rotating field motor (21) in combination with a specific type of inverter (10) for performing short-circuit braking without damage is checked under specified operating conditions in an experimental environment and, for this purpose, information is stored in an electronically readable data memory (24) which is structurally coupled to a rotating field motor (21) of a successfully tested type, wherein the suitability and preferably the specified operating conditions are derivable from the stored information, so that during operation with a robot the information is read out from the data memory (23) by the control electronics (40) of the inverter (10) and/or by the safety controller (300) and/or by the functional controller (200) and compared with the type of inverter (10) used, wherein the movement of the robot is prevented until a positive test result is established.

13. Computer program product which, on a program-controlled device, causes the method according to one of claims 9 to 12 to be carried out.

## Revendications

1. Commande électrique (100) destinée à un robot industriel, dans laquelle la commande (100) comprend un onduleur (10) doté d'un premier demi-pont (11) et d'un second demi-pont (12) destinés à générer une tension de champ tournant à partir d'un circuit intermédiaire à courant continu, de l'électronique de commande (40) destinée à générer des signaux de commande (S1 - S6) ayant pour objet d'actionner tous les commutateurs de puissance (T1, T3, T5) du premier demi-pont (11) et tous les commutateurs de puissance (T2, T4, T6) du second demi-pont (12), et un moteur à champ tournant (21) alimenté par l'onduleur (10) au moyen d'un circuit électrique de moteur (33),
dans laquelle l'onduleur (10) comprend un premier dispositif de connexion (13) destiné à fournir des signaux de commande (A) ayant pour objet d'influencer le mode opérationnel de la commande (100) par un organe de commande fonctionnel (200) du robot, et un dispositif d'interface (14, 15) destiné à fournir au moins un signal de sécurité (STO1, STO2) de déconnexion forcée de la tension de champ tournant par un organe de commande de sécurité (300) du robot,
dans laquelle un circuit d'attaque (O1- O6) doté d'un coupleur optique est attribué à chaque commutateur de puissance (T1 - T6), lequel coupleur optique forme une entrée de commande bipolaire (I1 - I6) destinée au commutateur de puissance respectif (T1 - T6), qui est isolée de manière galvanique du circuit électrique de moteur (33),
dans laquelle le circuit d'attaque respectif (O1, O3, O5) des commutateurs de puissance (T1, T3, T5) du premier demi-pont (11) est configuré pour faire passer le commutateur de puissance (T1, T3, T5) respectivement attribué au circuit d'attaque (O1, O3, O5) à un état non conducteur lorsque l'entrée de commande bipolaire (I1, I3, I5) du coupleur optique attribué au circuit d'attaque respectif (O1, O3, O5) est dans un état sans tension ou courant appliqué,
**caractérisée en ce que**
le circuit d'attaque respectif (O2, O4, O6) des commutateurs de puissance (T2, T4, T6) du second demi-pont (12) est configuré pour faire passer le commutateur de puissance (T2, T4, T6) respectivement attribué au circuit d'attaque (O2, O4, O6) à un état conducteur lorsque l'entrée de commande bipolaire (I2, I4, I6) du coupleur optique attribué au circuit d'attaque respectif (O2, O4, O6) est dans un état sans tension ou courant appliqué, et
un dispositif de commutation (60) est prévu, lequel est configuré pour utiliser le signal de sécurité (STO1, STO2) de la déconnexion forcée de la tension de champ tournant pour commuter simultanément les entrées de commande bipolaires (I1 - I6) des coupleurs optiques des circuits d'attaque (O1 - O6) de tous les commutateurs de puissance (T1 - T6) de l'onduleur (10) à un état sans tension et/ou courant appliqués.

2. Commande électrique selon la revendication 1,
**caractérisée en ce que**
le signal de sécurité (STO1, STO2) est implémenté en tant que double circuit, dans laquelle le dispositif de commutation (60) est configuré pour commuter indépendamment, à la fois au moyen du premier circuit (STO1) de même qu'au moyen du second circuit (STO2), les entrées de commande bipolaires (I1 - I6) des coupleurs optiques des circuits d'attaque (O1 - O6) simultanément à un état sans tension et/ou courant appliqués.

3. Commande électrique selon la revendication 1 ou la revendication 2, **caractérisée en ce que**
le dispositif d'interface (14, 15) comporte une première interface (14) et une seconde interface (15) destinées à recevoir un premier signal de sécurité (STO1) et un second signal de sécurité (STO2) qui est redondant au premier signal de sécurité (STO1) en provenance de l'organe de commande de sécurité (300) du robot, dans laquelle, au moyen du premier signal de sécurité (STO1), un premier commutateur (61) du dispositif de commutation (60) est actionné pour déconnecter les diodes (D1 - D6) des coupleurs optiques (O1 - O6) de la masse (0V), et dans laquelle, au moyen du second signal de sécurité (STO2), un second commutateur (62) du dispositif de commutation (60) est actionné pour déconnecter l'électronique de commande (40) destinée à commander les coupleurs optiques (O1 - O6) de la tension d'alimentation (VV).

4. Commande électrique selon l'une des revendications 1 à 3,
**caractérisée en ce que**
le dispositif de commutation (60) est configuré pour commuter les entrées de commande bipolaires (I1 - I6) des coupleurs optiques des circuits d'attaque (O1 - O6) de tous les commutateurs de puissance (T1 - T6) simultanément sans tension et/ou courant appliqués lorsque le signal de sécurité (STO1, STO2) est dans un état sans courant appliqué ou dans un état sans tension appliquée par rapport à un potentiel de référence fixe.

5. Commande électrique selon l'une des revendications 1 à 4,
**caractérisée en ce que**
le moteur à champ tournant (21) alimenté par l'onduleur (10) est un moteur synchrone à excitation permanente.

6. Commande électrique selon l'une des revendications 1 à 5,
**caractérisée en ce que**
une mémoire de données (24) couplée structuralement au moteur à champ tournant (21) et pouvant faire l'objet d'un accès électronique est prévue, dans laquelle l'électronique de commande (40) de l'onduleur (10) et/ou l'organe de commande de sécurité (300) et/ou l'organe de commande fonctionnel (200) sont configurés pour lire la mémoire de données (24) dès la connexion du moteur à champ tournant (21) à l'onduleur (10) prêt à fonctionner, dans laquelle l'électronique de commande (40) de l'onduleur (10) et/ou l'organe de commande de sécurité (300) et/ou l'organe de commande fonctionnel (200) sont configurés pour dériver l'appropriation du moteur à champ tournant (21) en combinaison avec l'onduleur (10) à un freinage par court-circuit sans endommagement à partir d'informations mémorisées dans la mémoire de données (24).

7. Commande électrique selon l'une des revendications 1 à 6,
**caractérisée en ce que**
un codeur d'angle rotatif (23) structuralement couplé au moteur à champ tournant (21) est prévu à des fins de détection par capteurs du changement angulaire absolu et/ou relatif d'un arbre de moteur (25) du moteur à champ tournant (21), qui est couplé au moyen d'une liaison de communication (80) à l'électronique de commande (40) de l'onduleur (10) et/ou à l'organe de commande de sécurité (300) et/ou à l'organe de commande fonctionnel (200) pour déterminer une position courante d'un axe de moteur du moteur à champ tournant (21) et/ou d'un axe de robot du robot, dans laquelle la mémoire de données pouvant faire l'objet d'un accès électronique (24) est structuralement et en termes de signaux combinée au codeur d'angle rotatif (23).

8. Robot industriel comportant une commande électrique (100) selon l'une des revendications 1 à 7.

9. Procédé de mise en œuvre d'une commande électrique (100) destinée à un robot industriel, en particulier d'une commande (100) selon l'une des revendications 1 à 8, dans lequel la commande (100) comprend un onduleur (10) doté d'un premier demi-pont (11) et d'un second demi-pont (12) destinés à générer une tension de champ tournant à partir d'un circuit intermédiaire à courant continu, de l'électronique de commande (40) destinée à générer des signaux de commande (S1 - S6) ayant pour objet d'actionner tous les commutateurs de puissance (T1, T3, T5) du premier demi-pont (11) et tous les commutateurs de puissance (T2, T4, T6) du second demi-pont (12), et un moteur à champ tournant (21) alimenté par l'onduleur (10) au moyen d'un circuit électrique de moteur (33), dans lequel l'onduleur (10) comprend un premier dispositif de connexion (13) destiné à fournir des signaux de commande (A) ayant pour objet d'influencer le mode opérationnel de la commande (100) par un organe de commande fonctionnel (200) du robot, et un dispositif d'interface (14, 15) destiné à fournir au moins un signal de sécurité (STO1, STO2) de déconnexion forcée de la tension de champ tournant par un organe de commande de sécurité (300) du robot, dans lequel un circuit d'attaque (O1- O6) doté d'un coupleur optique est attribué à chaque commutateur de puissance (T1 - T6), lequel coupleur optique forme une entrée de commande bipolaire (I1 - I6), qui est isolée de manière galvanique du circuit électrique de moteur (33), destinée au commutateur de puissance respectif (T1 - T6),
dans lequel le circuit d'attaque respectif (O1, O3, O5) du commutateur de puissance (T1, T3, T5) du premier demi-pont (11) fait passer le commutateur de puissance (T1, T3, T5) respectivement attribué au circuit d'attaque (O1, O3, O5) à un état non conducteur lorsque l'entrée de commande bipolaire (I1, I3, I5) du coupleur optique attribué au circuit d'attaque respectif (O1, O3, O5) est dans un état sans tension ou courant appliqué,
**caractérisé en ce que**
le circuit d'attaque respectif (O2, O4, O6) des commutateurs de puissance (T2, T4, T6) du second demi-pont (12) fait passer le commutateur de puissance (T2, T4, T6) respectivement attribué au circuit d'attaque (O2, O4, O6) à un état conducteur lorsque l'entrée de commande bipolaire (I2, I4, I6) du coupleur optique attribué au circuit d'attaque respectif (O2, O4, O6) est dans un état sans tension ou courant appliqué, et
les entrées de commande bipolaires (I1 - I6) des coupleurs optiques des circuits d'attaque (O1 - O6) de tous les commutateurs de puissance (T1 - T6) de l'onduleur (10) sont simultanément commutées sans tension et/ou courant appliqués par le signal de sécurité (STO1, STO2) de la déconnexion forcée de la tension de champ tournant.

10. Procédé selon la revendication 9,
**caractérisé en ce que**
la commande électrique (100) comprend un frein mécanique (22) destiné à appliquer un couple de freinage à l'arbre de moteur (25) du moteur à champ tournant (21), et le frein mécanique (22) est activé simultanément à l'application du signal de sécurité (STO1, STO2) pour l'arrêt sûr.

11. Procédé selon la revendication 10,
**caractérisé en ce que**
l'organe de commande de sécurité (300) surveille le déplacement du robot par rapport à des limites définies concernant des positions, des vitesses et/ou des accélérations, tenant compte d'une distance de freinage maximale qui dépend de la vitesse, et applique le signal de sécurité (STO1, STO2) si une vitesse maximale admissible déterminée pour l'état respectif de déplacement du robot est dépassée et/ou si une distance minimale par rapport à une limite de position à maintenir pour une vitesse courante n'est pas atteinte, dans lequel la somme du couple de freinage garanti appliqué par le frein mécanique (22) et du couple de freinage garanti appliqué par le moteur à champ tournant court-circuité (21) est prise en compte lors de la détermination ou de la vérification de la distance de freinage maximale dépendant de la vitesse.

12. Procédé selon l'une des revendications 9 à 11,
**caractérisé en ce que**
l'appropriation d'un type spécifique d'un moteur à champ tournant (21) en combinaison avec un type spécifique d'onduleur (10) à une mise en œuvre d'un freinage par court-circuit sans endommagement est vérifiée dans des conditions d'exploitation spécifiées dans un environnement expérimental et, à cette fin, des informations sont mémorisées dans une mémoire de données lisible électroniquement (24) qui est structuralement couplée à un moteur à champ tournant (21) d'un type testé avec succès, dans lequel l'appropriation et de préférence les conditions d'exploitation spécifiées peuvent être dérivées des informations mémorisées, de sorte que, pendant l'exploitation d'un robot, les informations soient lues dans la mémoire de données (23) par l'électronique de commande (40) de l'onduleur (10) et/ou par l'organe de commande de sécurité (300) et/ou par l'organe de commande fonctionnel (200) et soient comparées au type d'onduleur (10) utilisé, dans lequel le déplacement du robot est empêché jusqu'à l'établissement d'un résultat de test positif.

13. Produit-programme informatique qui, sur un dispositif commandé par programme, provoque la mise en œuvre du procédé selon l'une des revendications 9 à 12.
